# FASCICULE DE BREVET EUROPEEN

(11) **EP 2 870 046 B1**
(45) Date de publication et mention de la délivrance du brevet: **05.05.2021**
(21) Numéro de dépôt: 13744710.8
(22) Date de dépôt: 05.07.2013
(51) Int. Cl.: B61L 15/00, B61L 27/00, G01M 13/045

(54) **DIAGNOSTIC DE L'ÉTAT STRUCTUREL D'UN ORGANE CINÉMATIQUE ROTATIF À DIAGNOSTIQUER D'UNE CHAÎNE CINÉMATIQUE D'UN APPAREIL, D'UNE MACHINE OU D'UN ENGIN, EN PARTICULIER UN ENGIN À ROUES**
DIAGNOSE DES STRUKTURELLEN ZUSTANDS EINES ROTIERENDEN BEWEGUNGSELEMENTS EINER REIHE ROTIERENDER ELEMENTE VON EINER VORRICHTUNG, EINER MASCHINE ODER EINEM FAHRZEUG, INSBESONDERE EINES FAHRZEUGS MIT RÄDERN
DIAGNOSIS OF THE STRUCTURAL STATE OF A ROTARY KINEMATIC MEMBER TO BE DIAGNOSED FROM A KINEMATIC CHAIN OF AN APPARATUS, A MACHINE OR A VEHICLE, IN PARTICULAR A WHEELED VEHICLE

(30) Priorité: 06.07.2012 FR 1256564
(43) Date de publication de la demande: 13.05.2015
(73) Titulaire: NTN-SNR Roulements, 74000 Annecy (FR)
(72) Inventeur: DESBIOLLES, Pascal, F-74570 Thorens Glieres (FR); FAUGERAS, Gilles, F-73630 Le Chatelard (FR); GUERRE-CHALEY, Frédéric, F-74230 Dingy Saint Clair (FR)
(74) Mandataire: Alatis
(86) Numéro de dépôt international: PCT/FR2013/051619
(87) Numéro de publication internationale: WO 2014/006352

(56) Documents cités:
- WO-A1-2004/024531
- WO-A1-2005/105536
- WO-A1-2008/014766
- US-A1- 2007 208 841

## Description

L'invention est relative au diagnostic de l'état structurel d'au moins un organe cinématique rotatif à diagnostiquer d'une chaîne cinématique d'un appareil, d'une machine, d'un engin, ladite chaîne cinématique comportant plusieurs organes cinématiques rotatifs associés les uns aux autres, dont, également, un organe cinématique rotatif pour la mesure et la collecte et au moins une unité de roulement.

Dans le contexte de l'invention, l'on entend par « chaîne cinématique », un ensemble mécanique comprenant ou associé à une transmission, un freinage, une boîte de vitesses, un motoréducteur, un variateur de vitesse, un démarreur, une turbine, un embrayage, cette liste étant indicative et nullement limitative.

L'invention a plus spécialement pour objet un système élémentaire de diagnostic, un système complexe de diagnostic comprenant plusieurs systèmes élémentaires de diagnostic en question, un sous-système élémentaire de diagnostic spécialement destiné à faire partie d'un tel système élémentaire de diagnostic, un appareil, machine ou engin ayant au moins un tel sous-système élémentaire de diagnostic, une unité de recueil de données, spécialement destinée à faire partie d'un tel système élémentaire de diagnostic et un procédé de mise en oeuvre d'un tel système élémentaire de diagnostic.

L'invention s'applique à une chaîne cinématique d'un engin, d'un appareil, d'une machine. Par exemple, il peut s'agir d'un engin à roues, pouvant comporter plusieurs chaînes cinématiques, chacune comportant plusieurs organes cinématiques associés les uns aux autres tels qu'une roue, un essieu associé à la roue, une unité de roulement à corps roulants associée à l'essieu et à un châssis, et le cas échéant un dispositif d'entraînement en rotation de l'essieu. Ou il peut s'agir d'une éolienne, d'un ventilateur industriel, d'une machine-outil.

Dans le contexte de l'invention, l'on entend par « unité de roulement », un ensemble constituant un roulement ou incluant un roulement et comprenant typiquement, au moins, une bague externe et une bague interne, les deux bagues étant coaxiales et espacées radialement, et une pluralité de corps roulants interposés entre les deux bagues et coopérant avec des chemins de roulement ménagés sur celles-ci, moyennant généralement une cage de roulement. Par exemple dans le cas particulier d'une application à un engin à roues, une telle unité de roulements est implantée sur l'engin à roues en question, d'une part étant portée par la structure portante de l'engin (châssis), d'autre part, portant l'arbre rotatif de roue.

Dans le cas particulier de l'application à un engin à roues, celui-ci est par exemple un train, mais peut être aussi un engin mobile et/ou automobile tel qu'un chariot de transport ou de manutention ou un camion, cette liste n'étant pas limitative. Un tel engin à roues est amené à se déplacer ou à être déplacé sur une voie d'un réseau de voies. Lors d'un tel déplacement, les unités de roulement sont en fonctionnement rotatif. Dans ce contexte, l'on entend par « voie » un espace apte au déplacement de l'engin à roues, notamment un espace aménagé pour permettre ou faciliter le déplacement. Ainsi, une voie peut être constituée de rails, dans le cas d'un train, d'une piste dans le cas d'un chariot, d'une chaussée dans le cas d'un camion. En général, il y a plusieurs voies agencées de sorte à former un réseau.

Dans le contexte de l'invention, l'on entend par état « structurel » d'un organe cinématique rotatif, l'état de l'organe cinématique rotatif eu égard à une caractéristique propre de celle-ci ayant un effet sur ses conditions de roulement. Par exemple, dans le cas particulier d'une unité de roulement, l'état structurel est la présence ou l'importance d'une altération de l'état de surface des chemins de roulement, de la bague, ou des corps roulants eux-mêmes, tel qu'un écaillage, ou une détérioration plus ou moins importante de la cage du roulement, qui peut avoir pour effet une irrégularité de la rotation, voire son blocage et *in fine* une destruction plus ou moins importante de l'unité de roulement. L'initiation d'une telle altération de l'unité de roulement est peu décelable voire invisible à l'œil, outre d'ailleurs qu'elle peut être masquée à la vue par des organes de l'unité de roulement ou de l'engin, l'appareil, la machine sur lequel il est implanté. Une telle altération de l'unité de roulement peut apparaître pour nombre de raisons, et de façon impromptue. Elle peut se dégrader de façon plus ou moins rapide. Et, elle peut perturber le bon fonctionnement de l'unité de roulement, et donc de l'engin, voire mettre en cause la sécurité.

Dans le contexte de l'invention, l'on entend par « diagnostic » de l'état structurel de l'organe cinématique, la conclusion tirée sur la nature ou le degré de cet état structurel, comparativement soit à l'état structurel théorique parfait, notamment d'origine, de l'organe cinématique soit à un état structurel considéré comme significatif, et notamment problématique ou plus ou moins critique, au regard d'un fonctionnement normal ou de la sécurité ou de la maintenance ou de la nécessité de remplacer ou de prévoir de remplacer l'organe cinématique par un l'organe cinématique neuf ou du moins ayant un état structurel convenable.

Dans le contexte de l'invention, l'on distingue le diagnostic de l'état structurel présent et le diagnostic de l'état structurel prévisionnel. L'état structurel présent se réfère à celui, réel, qui est contemporain du diagnostic ou bien de la (ou des) mesure(s) qui le permet(tent). L'état structurel prévisionnel se réfère à celui, prospectif, qui peut être déduit d'une (ou de) mesure(s) et d'une loi d'évolution donnée de l'état structurel en fonction de la rotation de l'organe cinématique.

Le document US 2007/0208841 porte sur un réseau auto-organisateur de faible puissance comprenant une pluralité de nœuds de communication sans fil communiquant sans fil avec l'autre. Les nœuds ont chacune un capteur fournissant une valeur de données de capteur respectif indicatif d'un paramètre physique dans l'environnement de ce nœud. Le réseau interrompt la communication sans fil avec des nœuds dans laquelle la valeur de données de capteur est en dehors d'une plage de valeurs de données de capteurs du réseau. Le réseau est de préférence un groupe de véhicules se déplaçant en même temps, en particulier un train, dans lequel chaque nœud est associé à une roue respective d'une voiture de chemin de fer. Les nœuds sont des appareils de faible puissance qui communiquent en utilisant les communications sans fil selon un protocole Zigbee. Les nœuds ont chacun un capteur supplémentaire de détection d'un paramètre physique. On détermine un degré de dégradation d'un roulement de la roue et on transmet les données du degré de dégradation au nœud principal. Le nœud principal communique avec un autre système d'ordinateur utilisant un système de communication d'une puissance plus élevée et transmet à celui-ci des données indicatives de la dégradation desdits roulements.

Le document WO 2005/105536 porte sur un système de diagnostic de l'état des unités de roulement d'un train, destiné au conducteur du train, qui comprend:
▪ des appareils de mesure et de collecte de la valeur d'un paramètre critique, associés aux unités de roulement, embarqués sur le train,
▪ des moyens de stockage de données, embarqués sur le train,
▪ des moyens de communication de données par liaison sans fil, embarqués sur le train,
▪ une unité de recueil de données, dissociée structurellement du train,
▪ et des moyens de calcul et d'analyse.

Les appareils de mesure sont reliés par nombre de liaisons à une unité principale portée par la locomotive qui porte également les moyens de calcul et d'analyse, associés par suite à cette dernière. Ainsi, le conducteur peut être informé de ce qu'une défaillance a été décelée sur une unité de roulement. Les moyens de communication de données par liaison sans fil sont mis en œuvre pour relier les appareils de mesure à l'unité principale. D'autre part, il est prévu de télécharger les données des moyens de calcul et d'analyse en gare, par radio, à des fins statistiques.

Un tel système procède donc de l'information d'urgence et immédiate du conducteur du train sur une déficience détectée d'une unité de roulement, non de la gestion préventive et curative des unités de roulement. En outre, un tel système impose d'équiper l'ensemble du train, pris en tant que tel, et de prévoir que la locomotive porte les moyens de stockage de données, les moyens de communication de données par radio, et les et des moyens de calcul et d'analyse.

Le document WO 2004/024531 décrit un appareil de diagnostic et un procédé de surveillance d'un système comprenant une pluralité de composants contrôlés. Il est prévu des capteurs fournissant des données de mesure relatives au fonctionnement des composants et des capteurs fournissant des données environnementales relatives à l'environnement de fonctionnement actuel du système. Il est prévu des moyens de traitement de données et des moyens de transmission de données.

Le document WO 2008/014766 porte également sur un système de diagnostic de l'état d'un roulement d'un train. Il décrit un capteur d'un paramètre opératoire monté directement sur le roulement mobile, associé à un moyen de transmission, monté également mobile, en regard duquel est placé une unité de recueil fixe, portée par un capot monté sur la boîte d'essieu, reliée à une antenne qui envoie un signal à une unité de traitement dissociée du train. Il est prévu un flasque mobile avec le roulement, portant le moyen de transmission et un flasque fixe porté par le capot monté sur la boîte d'essieu, les deux flasques formant une génératrice de courant. Le document WO 2008/014766 décrit un tel système pour un seul roulement et n'envisage pas la structure en vue de diagnostiquer l'état de tous les roulements.

Le document FR 2 944 875 décrit un procédé de détection d'un défaut structurel d'une unité de roulement. Pour cela, on mesure la vitesse instantanée de rotation de l'unité de roulement et on traite la vitesse ainsi mesurée de sorte à déduire l'apparition d'un défaut (c'est-à-dire une modification) de l'état structurel de de l'unité de roulement. Ce procédé ne permet donc pas de diagnostiquer un défaut structurel sur les autres organes cinématiques rotatifs de la même chaîne cinématique.

Le document US2007/0208841A1 divulgue un système de diagnostic à monter sur les boîtes à essieux pour les diagnostiquer et un système de communication sans fil entre ces capteurs.

Il existe donc le besoin de pouvoir diagnostiquer un défaut structurel sur tel ou tel des organes cinématiques rotatifs d'une même chaîne cinématique, autre que l'unité de roulement sur laquelle on mesure la vitesse instantanée.

A cet effet, selon un premier aspect, l'invention a pour objet un système élémentaire de diagnostic de l'état structurel d'au moins un organe cinématique rotatif à diagnostiquer d'une chaîne cinématique d'un appareil, d'une machine, d'un engin, en particulier un engin à roues pour son déplacement sur un réseau de voies, ladite chaîne cinématique comportant plusieurs organes cinématiques rotatifs associés les uns aux autres, dont un organe cinématique rotatif pour la mesure et la collecte, au moins une unité de roulement, les plusieurs organes cinématiques rotatifs étant en particulier au moins une roue, au moins un essieu associé à la roue, la au moins une unité de roulement associée à l'essieu et au châssis de l'engin, et, le cas échéant, au moins un dispositif d'entraînement en rotation de l'essieu, qui comprend :
▪ un appareil de mesure et de collecte de la valeur d'au moins un paramètre des conditions de roulage de l'organe cinématique rotatif (à savoir l'organe rotatif pour la mesure et la collecte), ce paramètre étant caractéristique de l'état structurel de l'organe cinématique rotatif à diagnostiquer, cet appareil de mesure et de collecte étant embarqué sur l'appareil, la machine, l'engin, associé structurellement et fonctionnellement à l'organe cinématique rotatif pour la mesure et la collecte et apte à mesurer et collecter les valeurs dudit paramètre et à fournir des données caractéristiques des conditions de roulage de l'organe cinématique rotatif à diagnostiquer, moyennant le cas échéant des moyens de traitement associés fonctionnellement,
▪ un moyen de stockage de données, embarqué sur l'appareil, la machine, l'engin,
▪ un moyen de calcul et d'analyse, apte, à partir des variations desdites données caractéristiques d'une fréquence correspondant à l'organe cinématique rotatif à diagnostiquer et d'au moins une valeur significative prédéterminée du - ou fonction du - paramètre caractéristique, à fournir une information de diagnostic de l'état structurel présent ou prévisionnel de l'organe cinématique rotatif à diagnostiquer.

Cet organe cinématique rotatif à diagnostiquer est différent de l'organe cinématique rotatif pour la mesure et la collecte.

Selon une réalisation, le paramètre des conditions de roulage de l'organe cinématique rotatif pour la mesure et la collecte est calculé à partir de la vitesse de rotation instantanée de l'organe cinématique rotatif pour la mesure et la collecte.

Selon une réalisation, le système élémentaire de diagnostic comporte, en outre :
▪ un moyen de communication de données par liaison sans fil dans une certaine zone de couverture, embarqué sur l'appareil, la machine, l'engin, associé fonctionnellement au moyen de stockage de données, aptes à transférer les données stockées,
▪ au moins une unité de recueil de données, dissociée structurellement de l'appareil, la machine, l'engin, apte à être positionnée structurellement dans la zone de couverture du moyen de communication de l'appareil, la machine, l'engin ayant ce moyen de communication, et à recueillir les données stockées.

Selon une première réalisation, le système élémentaire de diagnostic est tel que :
▪ le moyen de calcul et d'analyse est dissocié de l'appareil, la machine, l'engin,
▪ le moyen de stockage de données est apte à stocker les données caractéristiques de conditions de roulage,
▪ le moyen de communication de données est apte à transférer les données caractéristiques de conditions de roulage.

Selon une seconde réalisation, il est tel que :
▪ le moyen de calcul et d'analyse est embarqué sur l'appareil, la machine, l'engin,
▪ le moyen de stockage de données est apte à stocker l'information de diagnostic,
▪ le moyen de communication de données est apte à transférer l'information de diagnostic.

Selon une réalisation, le moyen de calcul et d'analyse est programmé de manière, à partir des données caractéristiques, à mettre en œuvre tout ou partie d'un procédé de détection d'une anomalie structurelle, et/ou à mettre en oeuvre un procédé de prédiction d'un état structurel après une certaine rotation.

Selon une réalisation, le moyen d'alimentation électrique des moyens du système élémentaire de diagnostic embarqués sur l'appareil, la machine, l'engin soit est propre audit système de diagnostic et autonome comme des batteries électriques ou moyennant des moyens de récupération d'énergie soit est au moins pour partie commun à plusieurs systèmes élémentaires de diagnostic analogues montés sur le même appareil, machine, engin et associés à plusieurs chaînes cinématiques de celui-ci soit est au moins pour partie commun aux moyens d'alimentation électrique de l'appareil, la machine, l'engin. En particulier, il peut être prévu en outre un moyen de contrôle et d'information de l'état de charge électrique du moyen d'alimentation électrique.

Selon une réalisation, le système élémentaire de diagnostic comprend un moyen de communication de données par liaison sans fil à courte distance inférieure à environ 100 mètres, plus particulièrement inférieure à environ 20 mètres, et/ou à moyenne distance comprise entre environ 100 mètres et environ 500 mètres, et/ou à longue distance comprise entre environ 500 mètres et quelques kilomètres.

Selon une réalisation, le système élémentaire de diagnostic comprend un moyen de stockage de données pendant une période de temps qui soit correspond à la période de temps entre deux recueils successifs de données par une unité de recueil soit correspond à une durée préfixée fixée par l'opérateur mettant en oeuvre le système élémentaire de diagnostic, le moyen de stockage étant vidé des données préalablement stockées à l'issue de la période de temps. Selon une réalisation, le système élémentaire de diagnostic comprend également un moyen de stockage permanent de données.

Selon les réalisations, une unité de recueil de données soit est fixe soit est déplaçable, en particulier transportable, plus spécialement portable en tout ou partie tel qu'une partie portative de mesure et une partie formant console d'accueil.

Selon une réalisation, dans le cas d'application à un engin à roues pour son déplacement sur un réseau de voies, en position de recueil, une unité de recueil est disposée le long d'une voie du réseau, d'un côté ou des deux côtés de ladite voie, en particulier en vis-à-vis, ou dans la région où plusieurs voies du réseau sont structurellement proches les unes des autres.

Selon les réalisations, dans cette application, le système élémentaire de diagnostic soit comprend une unique unité de recueil pour la totalité du réseau de voies soit comprend une pluralité d'unités de recueil, en particulier une pluralité d'unités de recueil réparties par rapport au réseau de voies, et plus spécialement réparties au moins grosso modo régulièrement.

Selon les réalisations, dans cette application, une unité de recueil est associée à une voie où en situation normale l'engin soit roule soit est à l'arrêt, le diagnostic étant effectué, respectivement, pour un engin roulant ou un engin à l'arrêt.

Selon les réalisations, le système élémentaire de diagnostic comprend soit un unique appareil de mesure et de collecte soit au moins deux appareils de mesure et de collecte montés en parallèle, en particulier un appareil de mesure et de collecte de haute résolution et un appareil de mesure et de collecte de basse consommation électrique, en particulier de basse résolution.

Selon un deuxième aspect, l'invention a pour objet un système complexe de diagnostic de l'état structurel d'au moins un organe cinématique rotatif à diagnostiquer de plusieurs chaînes cinématiques d'un appareil, d'une machine, d'un engin, en particulier un engin à roues pour son déplacement sur un réseau de voies, chacune desdites chaînes cinématique comportant plusieurs organes cinématiques rotatifs associés les uns aux autres, dont un organe cinématique rotatif pour la mesure et la collecte différent de l'organe rotatif à diagnostiquer, au moins une unité de roulement, les plusieurs organes cinématiques rotatifs étant en particulier au moins une roue, au moins un essieu associé à la roue, la au moins une unité de roulement associée à l'essieu et au châssis de l'engin, et, le cas échéant, au moins un dispositif d'entraînement en rotation de l'essieu, plusieurs chaînes cinématiques pouvant être au moins pour partie communes comme dans un essieu ou un boggie, qui comprend, pour chaque chaîne cinématique un système élémentaire de diagnostic tel qu'il a été précédemment décrit, les systèmes élémentaires de diagnostic soit étant distincts soit étant pour partie communs.

Selon un troisième aspect, l'invention a pour objet un sous-système élémentaire de diagnostic spécialement destiné à faire partie d'un système élémentaire de diagnostic tel qu'il a été précédemment décrit en étant embarqué et monté sur un appareil, une machine, un engin, en particulier un engin à roues pour son déplacement sur un réseau de voies, ayant au moins une chaîne cinématique comportant plusieurs organes cinématiques rotatifs associés les uns aux autres, dont un organe cinématique rotatif pour la mesure et la collecte différent de l'organe rotatif à diagnostiquer, au moins une unité de roulement, les plusieurs organes cinématiques rotatifs étant en particulier au moins une roue, au moins un essieu associé à la roue, la au moins une unité de roulement associée à l'essieu et au châssis de l'engin, et, le cas échéant, au moins un dispositif d'entraînement en rotation de l'essieu, qui comprend :
▪ un appareil de mesure et de collecte et, le cas échéant, un moyen de traitement,
▪ un moyen de stockage de données,
▪ un moyen de communication de données par liaison sans fil dans une certaine zone de couverture.

Selon une réalisation, le sous-système élémentaire de diagnostic comprend en outre, un moyen de calcul et d'analyse.

Selon une réalisation, le sous-système élémentaire de diagnostic comprend en outre, un moyen d'alimentation électrique propre.

Selon les réalisations, le sous-système élémentaire de diagnostic est à l'état démonté et apte à être embarqué et monté sur l'appareil, la machine, l'engin, en particulier l'engin à roues ou il est à l'état monté et embarqué sur l'appareil, la machine, l'engin, en particulier l'engin à roues, intégré à l'appareil, la machine, l'engin en première monte ou monté sur l'appareil, la machine, l'engin postérieurement à sa réalisation.

Selon un quatrième aspect, l'invention a pour objet un appareil, une machine, un engin, en particulier un engin à roues pour son déplacement sur un réseau de voies, ayant au moins une chaîne cinématique comportant plusieurs organes cinématiques rotatifs associés les uns aux autres, dont au moins un organe à diagnostiquer dont l'état structurel est à diagnostiquer, un organe cinématique rotatif pour la mesure et la collecte différent de l'organe rotatif à diagnostiquer, au moins une unité de roulement, les plusieurs organes cinématiques rotatifs étant en particulier au moins une roue, au moins un essieu associé à la roue, la au moins une unité de roulement associée à l'essieu et au châssis de l'engin, et, le cas échéant, au moins un dispositif d'entraînement en rotation de l'essieu, sur lequel est embarqué et monté au moins un sous-système élémentaire de diagnostic tel qu'il a été décrit précédemment, spécialement destiné à faire partie d'un système élémentaire de diagnostic tel qu'il a été décrit précédemment, en étant associé à la chaîne cinématique comprenant l'organe à diagnostiquer.

Selon les réalisations, le sous-système élémentaire de diagnostic soit est intégré à l'appareil, la machine, l'engin en première monte soit est monté sur l'appareil, la machine, l'engin postérieurement à sa réalisation.

Selon une réalisation, l'appareil, la machine, l'engin comprend une pluralité de roues et plusieurs chaînes cinématiques, tel qu'un engin tracté, en particulier un train, ou un engin mobile ou automobile.

Selon un cinquième aspect, l'invention a pour objet une unité de recueil de données, spécialement destinée à faire partie d'un système élémentaire de diagnostic tel qu'il a été décrit précédemment, qui est dissociée structurellement de l'appareil, la machine, l'engin et apte à être positionnée structurellement dans la zone de couverture du moyen de communication de l'appareil, la machine, l'engin ayant ce moyen de communication, et à recueillir les données stockées.

Selon les réalisations, l'unité de recueil est agencée pour soit être fixée, telle qu'une borne, soit être déplaçable, en particulier transportable, plus spécialement portable en tout ou partie tel qu'une partie portative de mesure et une partie formant console d'accueil.

Selon un sixième aspect, l'invention a pour objet un procédé de mise en œuvre d'un système élémentaire de diagnostic tel qu'il a été décrit précédemment, dans lequel :
▪ moyennant la mise en œuvre de l'appareil de mesure et de collecte, on mesure et on collecte dans le temps la valeur dudit paramètre et on fournit des données caractéristiques des conditions de roulage de l'organe cinématique rotatif à diagnostiquer,
▪ moyennant la mise en œuvre du moyen de calcul et d'analyse, on fournit une information de diagnostic de l'état structurel présent ou prévisionnel de l'organe cinématique rotatif à diagnostiquer,
▪ moyennant la mise en œuvre du moyen de communication de données et de l'unité de recueil, on transfère des données à l'unité de recueil de données alors que celle-ci est positionnée structurellement dans la zone de couverture du moyen de communication.

Selon une réalisation, on met en œuvre l'appareil de mesure et de collecte de sorte à mesurer et collecter dans le temps le paramètre des conditions de roulage de l'organe cinématique rotatif pour la mesure et la collecte calculé à partir de la vitesse de rotation instantanée de l'organe cinématique rotatif pour la mesure et la collecte.

Selon une réalisation, dans le cas d'application à un engin à roues pour son déplacement sur un réseau de voies, on associe l'unité de recueil à une voie où en situation normale l'engin soit roule soit est à l'arrêt, et on effectue le diagnostic, respectivement, pour un engin roulant ou un engin à l'arrêt.

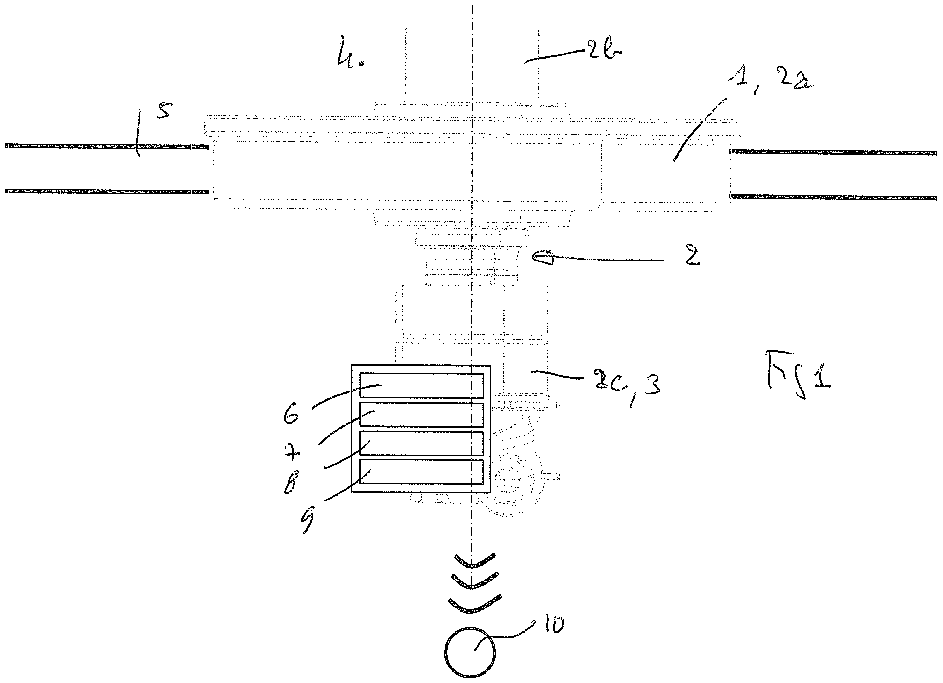

On décrit maintenant brièvement la figure 1 du dessin.

La figure 1 est une représentation schématique, d'une part, d'une chaîne cinématique comportant plusieurs organes cinématiques associés les uns aux autres d'un appareil, d'une machine ou d'un engin, ici une roue, un essieu associé à la roue, une unité de roulement à corps roulants associée à l'essieu et à un châssis, comprenant un organe cinématique rotatif dont l'état structurel est à diagnostiquer, ici la roue de la chaîne cinématique, et un organe cinématique rotatif pour la mesure et la collecte, ici une unité de roulement de la chaîne cinématique et, d'autre part, d'un système élémentaire de diagnostic de l'état structurel de l'organe cinématique rotatif à diagnostiquer.

On décrit maintenant en détail plusieurs modes de réalisation de l'invention au moyen des exemples expliqués à l'aide du dessin et en utilisant les signes de référence qui figurent dans le dessin.

L'invention a pour objet le diagnostic de l'état structurel d'au moins un organe cinématique rotatif à diagnostiquer 1, d'une chaîne cinématique 2 comprenant un organe cinématique rotatif pour la mesure et la collecte 3, à partir de la mesure et de la de la valeur d'au moins un paramètre des conditions de roulage de l'organe cinématique rotatif pour la mesure et la collecte 3.

Selon une réalisation de grand intérêt, l'organe cinématique rotatif à diagnostiquer 1 est différent de l'organe cinématique rotatif pour la mesure et la collecte 3. Par exemple, comme envisagé sur la figure 1, l'organe cinématique rotatif à diagnostiquer 1 peut être la roue 2a de la chaîne cinématique 2, tandis que l'organe cinématique rotatif pour la mesure et la collecte 3 peut être unité de roulement 2c de la chaîne cinématique 2. Cet exemple n'est qu'illustratif et non limitatif, l'organe cinématique rotatif à diagnostiquer 1 et l'organe cinématique rotatif pour la mesure et la collecte 3 pouvant être autres et quelconques, tout en appartenant à la même chaîne cinématique 2.

La description se poursuit en référence à cette réalisation et au cas où le diagnostic de l'état structurel concerne un seul organe cinématique rotatif à diagnostiquer 1, à partir de la mesure et de la valeur d'un seul paramètre des conditions de roulage de l'organe cinématique rotatif pour la mesure et la collecte 3.

Cependant, qui peut le plus pouvant le moins, l'invention est également applicable à une réalisation dans laquelle l'organe cinématique rotatif à diagnostiquer 1 est le même que l'organe cinématique rotatif pour la mesure et la collecte 3.

La chaîne cinématique 2 appartient à un appareil, une machine, un engin 4. En particulier, il peut s'agir d'un engin 4 à roues pour son déplacement sur un réseau de voies 5. Cet exemple n'est qu'illustratif et non limitatif, d'autres applications pouvant être envisagées telles que, notamment, un véhicule automobile ou non, une éolienne, un ventilateur industriel ou une machine-outil.

La chaîne cinématique 2 comporte plusieurs organes cinématiques rotatifs 2a, 2b, 2c... associés les uns aux autres, dont l'organe cinématique rotatif à diagnostiquer 1, l'organe cinématique rotatif pour la mesure et la collecte 3, au moins une unité de roulement 2c. Par exemple, les organes cinématiques rotatifs sont au moins une roue 2a, au moins un essieu 2b associé à la roue, la au moins une unité de roulement 2c associée à l'essieu et au châssis de l'engin 4, et, le cas échéant, au moins un dispositif d'entraînement en rotation de l'essieu 2b.

Selon une réalisation de grand intérêt, l'organe cinématique rotatif pour la mesure et la collecte 3 est l'unité de roulement 2c et le paramètre des conditions de roulage de l'organe cinématique rotatif pour la mesure et la collecte 3, 2c est calculé à partir de la vitesse de rotation instantanée de cet organe 3, 2c. La description se poursuit en référence à cette réalisation.

Comme indiqué, l'on entend par « unité de roulement » 2c, un ensemble constituant un roulement ou incluant un roulement et comprenant typiquement, au moins, une bague externe et une bague interne, les deux bagues étant coaxiales et espacées radialement, et une pluralité de corps roulants interposés entre les deux bagues et coopérant avec des chemins de roulement ménagées sur celles-ci, moyennant généralement une cage de roulement.

L'invention a pour objet le système élémentaire de diagnostic de l'état structurel de l'organe cinématique rotatif à diagnostiquer 1. Elle a également pour objet un système complexe de diagnostic adapté au cas où il existe plusieurs chaînes cinématiques 2 d'un appareil, d'une machine, d'un engin 4, ces chaînes cinématiques 2 pouvant être, selon les réalisations, au moins pour partie communes comme dans un essieu ou un boggie. Un tel système complexe de diagnostic comprend, pour chaque chaîne cinématique 2, un système élémentaire de diagnostic. Selon les réalisations, les différents systèmes élémentaires de diagnostic sont soit distincts soit pour partie communs.

L'invention a également pour objet un sous-système élémentaire de diagnostic qui est la partie d'un système élémentaire de diagnostic qui est embarquée et montée sur l'appareil, la machine, l'engin 4, en particulier, comme indiqué, un engin à roues 4 pour son déplacement sur un réseau de voies 5. Elle a également pour objet un tel appareil, une telle machine, un tel engin 4 ayant au moins une chaîne cinématique 2, sur lequel est embarqué et monté au moins un tel sous-système élémentaire de diagnostic en étant associé à la chaîne cinématique 2 comprenant l'organe à diagnostiquer 1.

L'invention a également pour objet une unité de recueil de données 10, spécialement destinée à faire partie d'un tel système élémentaire de diagnostic.

L'invention a également pour objet un procédé de mise en oeuvre d'un tel système élémentaire de diagnostic.

L'état structurel objet du diagnostic est typiquement une altération (défaut) de l'organe cinématique rotatif à diagnostiquer 1.

L'invention est utile pour la prévention des incidents pouvant affecter l'organe cinématique rotatif à diagnostiquer 1 ou sa maintenance, y compris le remplacement.

L'invention repose sur les deux principes qui sont maintenant exposés.

Le premier principe est que l'on peut détecter un défaut structurel d'un ensemble mécanique comprenant un organe tournant, moyennant une analyse préalable d'identification d'une fréquence caractéristique de l'apparition du défaut sur un tour de rotation de l'organe tournant et les étapes itératives consistant à :
- mesurer la vitesse instantanée de rotation de l'organe tournant,
- échantillonner angulairement la mesure pour obtenir un signal échantillonné qui est représentatif de la vitesse instantanée de rotation de l'organe tournant,
- procéder à une analyse harmonique spatiale du signal échantillonné pour obtenir un spectre de la vitesse instantanée de rotation de l'organe tournant, par exemple par transformée de Fourier spatiale du signal échantillonné,
- surveiller l'amplitude du spectre pour la fréquence caractéristique.

Ainsi, en fonction de ladite amplitude, on peut en déduire l'apparition du défaut correspondant, par exemple parce que l'amplitude du spectre est supérieure à un seuil. On peut en outre quantifier le défaut en fonction de l'amplitude et/ou de la forme du spectre pour la fréquence caractéristique.

Un tel procédé est connu du document FR-A-2 944 875.

L'analyse préalable peut être réalisée moyennant une étude géométrique de l'ensemble mécanique, en particulier à partir des relations cinématiques entre les différents composants mécaniques de l'ensemble, de sorte à localiser une fréquence identifiant chacun des défauts structurels susceptibles de se produire. Par exemple, pour une unité de roulement, l'identification de la fréquence caractéristique d'un défaut peut être réalisée par calcul de la fréquence de passage d'un corps roulant sur ledit défaut. Ainsi, la fréquence caractéristique peut correspondre à une estimation du nombre de fois par tour qu'un corps roulant passe sur le défaut.

Le second principe est que l'on peut différencier l'organe cinématique rotatif à diagnostiquer 1 et l'organe cinématique rotatif pour la mesure et la collecte 3 car un défaut impacte la vitesse instantanée avec une fréquence différente selon l'organe de la chaîne cinématique où se produit ce défaut. C'est pourquoi il est possible que l'organe cinématique rotatif à diagnostiquer 1 soit autre que l'organe cinématique rotatif pour la mesure et la collecte 3, comme il a été indiqué.

Le système élémentaire de diagnostic comprend tout d'abord un appareil de mesure et de collecte 6 de la valeur d'un paramètre des conditions de roulage de l'organe cinématique rotatif pour la mesure et la collecte 3, ici l'unité de roulement 2c, calculé à partir de la vitesse instantanée de l'organe cinématique rotatif pour la mesure et la collecte 3 / unité de roulement 2c.

Ce paramètre est par ailleurs caractéristique de l'état structurel de l'organe cinématique rotatif à diagnostiquer 1, conformément au second principe précédemment exposé.

Cet appareil de mesure et de collecte 6 est embarqué sur l'appareil, la machine, l'engin 4. Il est associé structurellement et fonctionnellement à l'organe cinématique rotatif pour la mesure et la collecte 3 / unité de roulement 2c. Ainsi, il est apte à mesurer et collecter les valeurs dudit paramètre (calculé à partir de la vitesse instantanée) et à fournir des données caractéristiques des conditions de roulage de l'organe cinématique rotatif à diagnostiquer 1. Le cas échéant, il est prévu des moyens de traitement associés fonctionnellement à l'appareil de mesure et de collecte 6.

La mesure de la vitesse instantanée de rotation de l'organe cinématique rotatif pour la mesure et la collecte 3 / unité de roulement 2c peut être réalisée sur l'organe tournant en question, par exemple au moyen d'un ensemble codeur-capteur, dont le codeur est solidaire en rotation de l'organe tournant et peut être de type magnétique avec une piste multipolaire d'une succession alternée de pôles magnétiques Nord et Sud dont la géométrie est identique et dont le capteur est fixe et disposé en regard avec un faible écartement de la piste multipolaire. Un tel ensemble codeur-capteur est par exemple décrit dans le document FR-A-2 792 403. Selon une réalisation, il est prévu en outre une détermination préalable de la signature propre au codeur, laquelle est soustraite du signal de la vitesse instantanée pour réaliser la surveillance de l'amplitude sur le spectre obtenu.

Dans une réalisation, le système élémentaire de diagnostic comprend un unique appareil de mesure et de collecte 6. Dans une autre réalisation, il comporte au moins deux appareils de mesure et de collecte 6 montés en parallèle. Par exemple, il est prévu un appareil de mesure et de collecte de haute résolution et un appareil de mesure et de collecte de basse consommation électrique, en particulier de basse résolution.

Le système élémentaire de diagnostic comprend ensuite un moyen de stockage de données 7, embarqué sur l'appareil, la machine, l'engin 4.

Un tel moyen de stockage de données 7 assure le stockage des données pendant une période de temps qui, par exemple, correspond à la période de temps entre deux recueils successifs de données par une unité de recueil telle que l'unité de recueil 10. Ou bien, par exemple, il assure le stockage des données pendant une période de temps qui correspond à une durée préfixée fixée par l'opérateur mettant en œuvre le système élémentaire de diagnostic.

Le moyen de stockage de données 7 peut être vidé des données préalablement stockées à l'issue de la période de temps. Mais, dans une réalisation possible, il peut être prévu que le système élémentaire de diagnostic comprenne également un moyen de stockage permanent de données, par exemple à des fins de contrôle de sécurité, de traçabilité, ou d'études.

Le système élémentaire de diagnostic comprend ensuite un moyen de calcul et d'analyse 8, apte, à partir des variations desdites données caractéristiques d'une fréquence de variation correspondant à l'organe cinématique rotatif à diagnostiquer 1 et d'au moins une valeur significative prédéterminée du - ou fonction du - paramètre caractéristique, à fournir une information de diagnostic de l'état structurel présent ou prévisionnel de l'organe cinématique rotatif à diagnostiquer 1.

Ce calcul et cette analyse repose sur le premier principe précédemment exposé.

Le moyen de calcul et d'analyse 8 est programmé, en fonction des souhaits, pour, à partir des données caractéristiques, mettre en œuvre tout ou partie d'un procédé de détection d'une anomalie structurelle, et/ou mettre en œuvre un procédé de prédiction d'un état structurel après une certaine rotation, moyennant une loi de prédiction.

Selon une réalisation de grand intérêt, le système élémentaire de diagnostic comprend également, et tout d'abord, un moyen de communication de données 9 par liaison sans fil dans une certaine zone de couverture. Ce moyen de communication de données 9 est embarqué sur l'appareil, la machine, l'engin 4. Il est associé fonctionnellement au moyen de stockage de données 7 et il est apte à transférer les données stockées.

Selon les réalisations, le moyen de communication de données 9 par liaison sans fil assure une communication à courte distance inférieure à environ 100 mètres, plus particulièrement inférieure à environ 20 mètres, et/ou une communication à moyenne distance comprise entre environ 100 mètres et environ 500 mètres, et/ou une communication à longue distance comprise entre environ 500 mètres et quelques kilomètres.

Selon cette même réalisation de grand intérêt, le système élémentaire de diagnostic comprend également, ensuite, au moins une unité de recueil de données 10, dissociée structurellement de l'appareil, la machine, l'engin 4 et apte à être positionnée structurellement dans la zone de couverture du moyen de communication de données 9 de l'appareil, de la machine, de l'engin 4 pourvu de ce moyen de communication 9. Cette unité de recueil de données 10 a pour fonction de recueillir les données stockées.

Une telle unité de recueil de données 10 peut faire l'objet de plusieurs variantes de réalisation. Ainsi, selon les cas, elle peut être fixe ou être déplaçable. En particulier, elle peut être transportable et plus spécialement portable en tout ou partie. Ainsi, selon une réalisation, elle peut comprendre une partie portative de mesure et une partie formant console d'accueil.

Dans le cas où le système élémentaire de diagnostic est appliqué à un engin à roues 4 pour son déplacement sur un réseau de voies 5, l'unité de recueil 10 est telle que, en position de recueil, elle est disposée le long d'une voie 5 du réseau, soit d'un seul côté soit des deux côtés de la voie 5, en particulier en vis-à-vis. Ou bien, l'unité de recueil 10 peut être disposée dans la région où plusieurs voies 5 du réseau sont structurellement proches les unes des autres.

Toujours, dans le cas où le système élémentaire de diagnostic est appliqué à un engin à roues 4, comme précédemment, le système élémentaire de diagnostic peut, selon les réalisations, comprendre une unique unité de recueil 10 pour la totalité du réseau de voies 5 ou bien comprendre une pluralité d'unités de recueil 10, telles que par exemple réparties par rapport au réseau de voies 5, et plus spécialement réparties au moins grosso modo régulièrement.

Dans cette même application, une unité de recueil 10 peut être associée à une voie 5 où en situation normale l'engin 4 soit roule soit est à l'arrêt, de sorte que le diagnostic est effectué, respectivement, pour un engin 4 qui est roulant ou qui est à l'arrêt.

Comme indiqué, l'invention a également pour objet l'unité de recueil de données 10 en tant qu'elle est spécialement destinée à faire partie du système élémentaire de diagnostic précédemment décrit.

Une telle unité de recueil de données 10 est dissociée structurellement de l'appareil, la machine, l'engin 4. Elle est apte à être positionnée structurellement dans la zone de couverture du moyen de communication 9 de l'appareil, la machine, l'engin 4 qui est pourvu de ce moyen de communication 9, de sorte à recueillir les données stockées, à savoir, selon les réalisations, l'information de diagnostic ou bien les données caractéristiques de conditions de roulage.

Une telle unité de recueil 10 peut être agencée, par exemple, pour être fixée, telle qu'une borne. Elle peut, dans une autre réalisation, être déplaçable, en particulier transportable, plus spécialement portable en tout ou partie tel qu'une partie portative de mesure et une partie formant console d'accueil.

Dans une réalisation représentée sur la figure 1, le moyen de calcul et d'analyse 8 est embarqué sur l'appareil, la machine, l'engin 4. Dans ce cas, le moyen de stockage de données 7 est apte à stocker l'information de diagnostic et le moyen de communication de données 9 est apte à transférer l'information de diagnostic.

Dans une autre réalisation possible, le moyen de calcul et d'analyse 8 est dissocié de l'appareil, la machine, l'engin 4. Dans ce cas, le moyen de stockage de données 7 est apte à stocker les données caractéristiques de conditions de roulage et le moyen de communication de données 9 est apte à transférer les données caractéristiques de conditions de roulage vers l'unité de recueil.

Le système élémentaire de diagnostic comporte, bien entendu, un moyen d'alimentation électrique de ceux de ses moyens constitutifs embarqués sur l'appareil, la machine, l'engin 4.

Selon une réalisation, ce moyen d'alimentation électrique est propre au système de diagnostic et autonome comme des batteries électriques ou moyennant des moyens de récupération d'énergie. Selon une autre réalisation, ce moyen d'alimentation électrique est au moins pour partie commun à plusieurs systèmes élémentaires de diagnostic analogues montés sur le même appareil, machine, engin 4 et associés à plusieurs chaînes cinématiques de celui-ci, si tel est le cas. Selon une autre réalisation, ce moyen d'alimentation électrique est au moins pour partie communs aux moyens d'alimentation électrique de l'appareil, la machine, l'engin 4. Le cas échéant, il est prévu, en outre, un moyen de contrôle et d'information de l'état de charge électrique du moyen d'alimentation électrique.

Le sous-système élémentaire de diagnostic spécialement destiné à faire partie d'un système élémentaire de diagnostic en étant embarqué et monté sur l'appareil, la machine, l'engin 4, comprend l'appareil de mesure et de collecte 6 et, le cas échéant, le moyen de traitement associé, le moyen de stockage de données 7, et le moyen de communication de données 9 par liaison sans fil dans une certaine zone de couverture. Dans la réalisation représentée, le sous-système élémentaire de diagnostic comprend en outre, le moyen de calcul et d'analyse 8.

Dans une réalisation, le sous-système élémentaire de diagnostic comprend en outre, le moyen d'alimentation électrique propre dont il a été précédemment question.

Un tel sous-système élémentaire de diagnostic peut être à l'état démonté et apte alors à être embarqué et monté sur l'appareil, la machine, l'engin 4, en particulier l'engin à roues. Un tel sous-système élémentaire de diagnostic peut, autrement, être à l'état monté et embarqué sur l'appareil, la machine, l'engin 4. Dans ce cas, le sous-système élémentaire de diagnostic peut être soit intégré à l'appareil, la machine, l'engin 4 en première monte soit monté sur l'appareil, la machine, l'engin 4, postérieurement à sa réalisation.

L'appareil, la machine, l'engin 4, en particulier l'engin à roues pour son déplacement sur un réseau de voies 5, comporte, embarqué et monté, au moins un sous-système élémentaire de diagnostic tel que décrit, spécialement destiné à faire partie d'un système élémentaire de diagnostic tel que décrit également, en étant associé à la chaîne cinématique 2 comprenant l'organe à diagnostiquer 1.

Comme indiqué, l'appareil, la machine, l'engin 4 est tel que le sous-système élémentaire de diagnostic soit est intégré à lui en première monte soit est monté sur lui postérieurement à sa réalisation.

Dans une réalisation, l'appareil, la machine, l'engin comprend une pluralité de roues 2a et plusieurs chaînes cinématiques 2, comme tel est le cas avec un engin tracté, en particulier un train, ou un engin mobile ou automobile.

On décrit maintenant le procédé de mise en œuvre du système élémentaire de diagnostic.

Ce procédé vaut pour toutes les réalisations, moyennant les adaptations convenables. En particulier, le procédé s'applique aussi bien dans le cas où le moyen de calcul et d'analyse 8 est embarqué sur l'appareil, la machine, l'engin 4, le moyen de stockage de données 7 étant alors apte à stocker l'information de diagnostic et le moyen de communication de données 9 étant apte à transférer l'information de diagnostic vers l'unité de recueil, que dans le cas où le moyen de calcul et d'analyse 8 est dissocié de l'appareil, la machine, l'engin 4, le moyen de stockage de données 7 étant alors apte à stocker les données caractéristiques de conditions de roulage et le moyen de communication de données 9 est alors apte à transférer les données caractéristiques de conditions de roulage.

Selon le procédé, moyennant la mise en oeuvre de l'appareil de mesure et de collecte 6, on mesure et on collecte dans le temps la valeur du paramètre dont il a été question, et on fournit des données caractéristiques des conditions de roulage de l'organe cinématique rotatif à diagnostiquer 1.

Par ailleurs, moyennant la mise en œuvre du moyen de calcul et d'analyse 8, on fournit une information de diagnostic de l'état structurel présent ou prévisionnel de l'organe cinématique rotatif à diagnostiquer 1.

Enfin, et dans le cas d'un système élémentaire de diagnostic comprenant un moyen de communication de données 9, moyennant la mise en œuvre de ce moyen de communication de données 9 et de l'unité de recueil de données 10, on transfère des données à l'unité de recueil de données 10, alors que celle-ci est positionnée structurellement dans la zone de couverture du moyen de communication de données 9.

Selon le procédé, on met en œuvre l'appareil de mesure et de collecte 6 de sorte à mesurer et collecter dans le temps le paramètre des conditions de roulage de l'organe cinématique rotatif pour la mesure et la collecte 3 / l'unité de roulement 2c calculé à partir de la vitesse de rotation instantanée de l'organe cinématique rotatif pour la mesure et la collecte 3 / l'unité de roulement 2c.

Dans le cas d'application à un engin à roues 4 pour son déplacement sur un réseau de voies 5, on associe l'unité de recueil 10 à une voie 5 où en situation normale l'engin 4 soit roule soit est à l'arrêt, et, ainsi, on effectue le diagnostic, respectivement, pour un engin 4 roulant ou un engin 4 à l'arrêt.

## Revendications

1. **Système élémentaire** de diagnostic de l'état structurel d'au moins un **organe cinématique rotatif à diagnostiquer** (1) d'une chaîne cinématique (2) d'un appareil, d'une machine, d'un **engin** (**4**), en particulier un engin à roues pour son déplacement sur un réseau de voies (5), ladite chaîne cinématique (2) comportant plusieurs organes cinématiques rotatifs associés les uns aux autres, dont **un organe cinématique rotatif pour la mesure et la collecte (3),** au moins une unité de roulement (2c), les plusieurs organes cinématiques rotatifs étant en particulier au moins une roue, au moins un essieu associé à la roue, la au moins une unité de roulement (2c) associée à l'essieu et au châssis de l'engin, et, le cas échéant, au moins un dispositif d'entraînement en rotation de l'essieu, qui comprend :
un **appareil de mesure et de collecte (6)** de la valeur d'au moins un **paramètre** des conditions de roulage de l'organe cinématique rotatif (3), ce paramètre étant caractéristique de l'état structurel de l'organe cinématique rotatif à diagnostiquer (1), cet appareil de mesure et de collecte (6) étant embarqué sur l'appareil, la machine, l'engin (4), associé structurellement et fonctionnellement à l'organe cinématique rotatif pour la mesure et la collecte (3) et apte à mesurer et collecter les valeurs dudit paramètre et à fournir des données caractéristiques des conditions de roulage de l'organe cinématique rotatif à diagnostiquer (1), moyennant le cas échéant des moyens de traitement associés fonctionnellement,
un **moyen de stockage de données** (7), embarqué sur l'appareil, la machine, l'engin (4),
un **moyen de calcul et d'analyse** (8), apte, à partir des variations desdites données caractéristiques, d'une **fréquence** correspondant à l'organe cinématique rotatif à diagnostiquer (1) et d'au moins une valeur significative prédéterminée du - ou fonction du - paramètre caractéristique, à fournir une information de diagnostic de l'état structurel présent ou prévisionnel de l'organe cinématique rotatif à diagnostiquer (1),
**caractérisé en ce que** l'organe cinématique rotatif à diagnostiquer (1) est différent de l'organe cinématique rotatif pour la mesure et la collecte (3).

2. Système élémentaire de diagnostic selon la revendication 1, dans lequel l'organe cinématique rotatif à diagnostiquer (1) est une roue et l'organe cinématique rotatif pour la mesure et la collecte (3) est une unité de roulement à corps roulants.

3. Système élémentaire de diagnostic selon l'une quelconque des revendications 1 à 2, dans lequel un défaut impacte la vitesse instantanée avec une fréquence différente selon qu'il se produit sur l'organe cinématique rotatif à diagnostiquer (1) ou sur l'organe cinématique rotatif pour la mesure et la collecte (3).

4. Système élémentaire de diagnostic selon l'une quelconque des revendications 1 à 3, dans lequel le moyen de calcul et d'analyse (8) est configuré pour :
- mesurer la vitesse instantanée de rotation de l'organe cinématique rotatif pour la mesure et la collecte,
- échantillonner angulairement la mesure pour obtenir un signal échantillonné qui est représentatif de la vitesse instantanée de rotation de l'organe cinématique rotatif pour la mesure et la collecte,
- procéder à une analyse harmonique spatiale du signal échantillonné pour obtenir un spectre de la vitesse instantanée de rotation de l'organe cinématique rotatif pour la mesure et la collecte, par exemple par transformée de Fourier spatiale du signal échantillonné,
- surveiller l'amplitude du spectre pour la fréquence caractéristique.

5. Système élémentaire de diagnostic selon l'une quelconque des revendications 1 à 4, dans lequel le paramètre des conditions de roulage de l'organe cinématique rotatif pour la mesure et la collecte (3) est calculé à partir de la vitesse de rotation instantanée de l'organe cinématique rotatif pour la mesure et la collecte (3).

6. Système élémentaire de diagnostic selon l'une quelconque des revendications 1 à 5, qui comporte, en outre :
un moyen de communication de données (9) par liaison sans fil dans une certaine zone de couverture, embarqué sur l'appareil, la machine, l'engin (4), associé fonctionnellement au moyen de stockage de données (7), aptes à transférer les données stockées,
au moins une unité de recueil de données (10), dissociée structurellement de l'appareil, la machine, l'engin (4), apte à être positionnée structurellement dans la zone de couverture du moyen de communication (9) de l'appareil, la machine, l'engin (4) ayant ce moyen de communication, et à recueillir les données stockées.

7. Système élémentaire de diagnostic selon la revendication 6, dans lequel :
le moyen de calcul et d'analyse (8) est dissocié de l'appareil, la machine, l'engin (4),
le moyen de stockage de données (7) est apte à stocker les données caractéristiques de conditions de roulage,
le moyen de communication de données (9) est apte à transférer les données caractéristiques de conditions de roulage, et notamment, dans lequel :
le moyen de calcul et d'analyse (8) est embarqué sur l'appareil, la machine, l'engin (4),
le moyen de stockage de données (7) est apte à stocker l'information de diagnostic,
le moyen de communication de données (9) est apte à transférer l'information de diagnostic.

8. Système élémentaire de diagnostic selon l'une quelconque des revendications 1 à 7, dans lequel le moyen de calcul et d'analyse (8) est programmé de manière, à partir des données caractéristiques, à mettre en œuvre tout ou partie d'un procédé de détection d'une anomalie structurelle, et/ou à mettre en œuvre un procédé de prédiction d'un état structurel après une certaine rotation.

9. Système élémentaire de diagnostic selon l'une quelconque des revendications 1 à 8, dans lequel le moyen d'alimentation électrique des moyens du système élémentaire de diagnostic embarqués sur l'appareil, la machine, l'engin (4) soit est propre audit système de diagnostic et autonome comme des batteries électriques ou moyennant des moyens de récupération d'énergie soit est au moins pour partie commun à plusieurs systèmes élémentaires de diagnostic analogues montés sur le même appareil, machine, engin (4) et associés à plusieurs chaînes cinématiques de celui-ci soit est au moins pour partie commun aux moyens d'alimentation électrique de l'appareil, la machine, l'engin (4),
et qui comprend notamment en outre un moyen de contrôle et d'information de l'état de charge électrique du moyen d'alimentation électrique.

10. Système élémentaire de diagnostic selon l'une quelconque des revendications 6 à 9, comprenant un moyen de communication de données (9) par liaison sans fil à courte distance inférieure à environ 100 mètres, plus particulièrement inférieure à environ 20 mètres, et/ou à moyenne distance comprise entre environ 100 mètres et environ 500 mètres, et/ou à longue distance comprise entre environ 500 mètres et quelques kilomètres.

11. Système élémentaire de diagnostic selon l'une quelconque des revendications 6 à 9, qui comprend un moyen de stockage de données (7) pendant une période de temps qui soit correspond à la période de temps entre deux recueils successifs de donnés par une unité de recueil soit correspond à une durée préfixée fixée par l'opérateur mettant en œuvre le système élémentaire de diagnostic, le moyen de stockage étant vidé des données préalablement stockées à l'issue de la période de temps, et qui comprend notamment également un moyen de stockage permanent de données.

12. Système élémentaire de diagnostic selon l'une quelconque des revendications 6 à 11, dans lequel une unité de recueil de données (10) soit est fixe soit est déplaçable, en particulier transportable, plus spécialement portable en tout ou partie tel qu'une partie portative de mesure et une partie formant console d'accueil.

13. Système élémentaire de diagnostic selon l'une quelconque des revendications 6 à 12, dans le cas d'application à un engin (4) à roues pour son déplacement sur un réseau de voies (5), dans lequel, on met en outre en œuvre l'une et/ou l'autre des caractéristiques suivantes :
en position de recueil, une unité de recueil est disposée le long d'une voie (5) du réseau, d'un côté ou des deux côtés de ladite voie (5), en particulier en vis-à-vis, ou dans la région où plusieurs voies (5) du réseau sont structurellement proches les unes des autres ;
le système élémentaire soit comprend une unique unité de recueil pour la totalité du réseau de voies (5) soit comprend une pluralité d'unités de recueil, en particulier une pluralité d'unités de recueil réparties par rapport au réseau de voies (5), et plus spécialement réparties au moins grosso modo régulièrement ;
une unité de recueil est associée à une voie où en situation normale l'engin (4) soit roule soit est à l'arrêt, le diagnostic étant effectué, respectivement, pour un engin (4) roulant ou un engin (4) à l'arrêt.

14. Système élémentaire de diagnostic selon l'une quelconque des revendications 1 à 13 qui comprend soit un unique appareil de mesure et de collecte (6) soit au moins deux appareils de mesure et de collecte montés en parallèle, en particulier un appareil de mesure et de collecte (6) de haute résolution et un appareil de mesure et de collecte (6) de basse consommation électrique, en particulier de basse résolution.

15. Système complexe de diagnostic de l'état structurel d'au moins un organe cinématique rotatif à diagnostiquer (1) de plusieurs chaînes cinématiques d'un appareil, d'une machine, d'un engin (4), en particulier un engin (4) à roues pour son déplacement sur un réseau de voies (5), chacune desdites chaînes cinématique comportant plusieurs organes cinématiques rotatifs associés les uns aux autres, dont un organe cinématique rotatif pour la mesure et la collecte (3) différent de l'organe cinématique rotatif à diagnostiquer (1), au moins une unité de roulement (2c), les plusieurs organes cinématiques rotatifs étant en particulier au moins une roue, au moins un essieu associé à la roue, la au moins une unité de roulement (2c) associée à l'essieu et au châssis de l'engin (4), et, le cas échéant, au moins un dispositif d'entraînement en rotation de l'essieu, plusieurs chaînes cinématiques pouvant être au moins pour partie communes comme dans un essieu ou un boggie, qui comprend, pour chaque chaîne cinématique (2) un système élémentaire de diagnostic selon l'une quelconque des revendications 1 à 14, les systèmes élémentaires de diagnostic soit étant distincts soit étant pour partie communs.

16. Sous-système élémentaire de diagnostic spécialement destiné à faire partie d'un système élémentaire de diagnostic selon l'une quelconque des revendications 1 à 14 en étant embarqué et monté sur un appareil, une machine, un engin (4), en particulier un engin (4) à roues pour son déplacement sur un réseau de voies (5), ayant au moins une chaîne cinématique (2) comportant plusieurs organes cinématiques rotatifs associés les uns aux autres, dont un organe cinématique rotatif pour la mesure et la collecte (3) différent de l'organe rotatif à diagnostiquer, au moins une unité de roulement (2c), les plusieurs organes cinématiques rotatifs étant en particulier au moins une roue, au moins un essieu associé à la roue, la au moins une unité de roulement (2c) associée à l'essieu et au châssis de l'engin (4), et, le cas échéant, au moins un dispositif d'entraînement en rotation de l'essieu, qui comprend :
un appareil de mesure et de collecte et, le cas échéant, un moyen de traitement, un moyen de stockage de données (7),
un moyen de communication de données (9) par liaison sans fil dans une certaine zone de couverture ;
et qui comprend notamment en outre, un moyen d'alimentation électrique propre.

17. Sous-système élémentaire de diagnostic selon la revendication 16, **caractérisé en ce qu'**il est à l'état démonté et apte à être embarqué et monté sur l'appareil, la machine, l'engin (4), en particulier l'engin (4) à roues.

18. Sous-système élémentaire de diagnostic selon la revendication 16, **caractérisé en ce qu'**il est à l'état monté et embarqué sur l'appareil, la machine, l'engin (4), en particulier l'engin (4) à roues, intégré à l'appareil, la machine, l'engin (4) en première monte ou monté sur l'appareil, la machine, l'engin (4) postérieurement à sa réalisation.

19. Appareil, machine, engin (4), en particulier engin (4) à roues pour son déplacement sur un réseau de voies (5), ayant au moins une chaîne cinématique (2) comportant plusieurs organes cinématiques rotatifs associés les uns aux autres, dont au moins un organe à diagnostiquer (1) dont l'état structurel est à diagnostiquer, un organe cinématique rotatif pour la mesure et la collecte (3), différent de l'organe cinématique rotatif à diagnostiquer (1), au moins une unité de roulement (2c), les plusieurs organes cinématiques rotatifs étant en particulier au moins une roue, au moins un essieu associé à la roue, la au moins une unité de roulement (2c) associée à l'essieu et au châssis de l'engin (4), et, le cas échéant, au moins un dispositif d'entraînement en rotation de l'essieu, sur lequel est embarqué et monté au moins un sous-système élémentaire de diagnostic selon l'une quelconque des revendications 16 à 18, spécialement destiné à faire partie d'un système élémentaire de diagnostic selon l'une quelconque des revendications 1 à 14, en étant associé à la chaîne cinématique (2) comprenant l'organe à diagnostiquer.

20. Appareil, machine, engin (4), en particulier engin (4) à roues selon la revendication 19, dans lequel le sous-système élémentaire de diagnostic soit est intégré à l'appareil, la machine, l'engin (4) en première monte soit est monté sur l'appareil, la machine, l'engin (4) postérieurement à sa réalisation, notamment qui comprend une pluralité de roues et plusieurs chaînes cinématiques, tel qu'un engin (4) tracté, en particulier un train, ou un engin (4) mobile ou automobile.

21. Procédé de mise en œuvre d'un système élémentaire de diagnostic selon l'une quelconque des revendications 6 à 13, dans lequel :
moyennant la mise en œuvre de l'appareil de mesure et de collecte, on mesure et on collecte dans le temps la valeur dudit paramètre et on fournit des données caractéristiques des conditions de roulage de l'organe cinématique rotatif à diagnostiquer (1), moyennant la mise en œuvre du moyen de calcul et d'analyse (8), on fournit une information de diagnostic de l'état structurel présent ou prévisionnel de l'organe cinématique rotatif à diagnostiquer (1),
moyennant la mise en œuvre du moyen de communication de données (9) et de l'unité de recueil, on transfère des données à l'unité de recueil de données (10) alors que celle-ci est positionnée structurellement dans la zone de couverture du moyen de communication ;
et notamment, dans le cas d'application à un engin (4) à roues pour son déplacement sur un réseau de voies (5), dans lequel on associe l'unité de recueil à une voie où en situation normale l'engin (4) soit roule soit est à l'arrêt, et on effectue le diagnostic, respectivement, pour un engin (4) roulant ou un engin (4) à l'arrêt.

22. Procédé selon la revendication 21, dans lequel on met en œuvre l'appareil de mesure et de collecte de sorte à mesurer et collecter dans le temps le paramètre des conditions de roulage de l'organe cinématique rotatif pour la mesure et la collecte (3) calculé à partir de la vitesse de rotation instantanée de l'organe cinématique rotatif pour la mesure et la collecte (3).

## Patentansprüche

1. **Basisdiagnosesystem** für den strukturellen Zustand mindestens eines **zu diagnostizierenden rotierenden Antriebsorgans** (1) eines Antriebsstrangs (2) eines Apparats, einer Maschine, eines **Geräts (4),** insbesondere eines Geräts auf Rädern für dessen Bewegung auf einem Bahnnetz (5), wobei der Antriebsstrang (2) mehrere einander zugeordnete rotierende Antriebsorgane umfasst, umfassend **ein rotierendes Antriebsorgan zur Erfassung und Messung (3),** mindestens eine Rolleinheit (2c), wobei die mehreren rotierenden Antriebsorgane insbesondere mindestens ein Rad sind, mindestens eine dem Rad zugeordnete Achse, die mindestens eine der Achsen und dem Rahmen des Fahrzeugs zugeordnete Rolleinheit (2c), und optional mindestens eine Drehantriebsvorrichtung für die Achse, das folgendes umfasst:
ein **Erfassungs- und Messinstrument (6)** für das Werten mindestens eines **Parameters** der Rollbedingungen des rotierenden Antriebsorgans (1), wobei dieser Parameter charakteristisch für den zu diagnostizierenden strukturellen Zustand des rotierenden Antriebsorgans (1) ist, wobei sich dieses Erfassungs- und Messinstrument (6) auf dem Apparat, der Maschine, dem Gerät (4) befindet, strukturell und funktionell dem rotierenden Antriebsorgan zur Erfassung und Messung (3) zugeordnet ist und geeignet ist, die Werte des Parameters zu messen und zu erfassen und, die für die Rollbedingungen des zu diagnostizierenden rotierenden Antriebsorgans (1) Charakteristikdaten bereitzustellen, gegebenenfalls mit Hilfe funktionell zugeordneten Verarbeitungsmitteln,
ein **Datenspeichermittel** (7), das sich an Bord des Apparats, der Maschine, des Geräts (4) befindet,
ein **Berechnungs- und Analysemittel** (8), das in der Lage ist, auf der Grundlage von Änderungen der Charakteristikdaten, einer dem zu diagnostizierenden rotierenden Antriebsorgan (1) entsprechenden **Frequenz** und mindestens eines vorbestimmten signifikanten Wertes des - oder einer Funktion des - charakteristischen Parameters eine Diagnoseinformation über den gegenwärtigen oder vorhergesagten strukturellen Zustand des zu diagnostizierenden rotierenden Antriebsorgans (1) bereitzustellen,
**dadurch gekennzeichnet, dass** das zu diagnostizierende rotierende Antriebsorgan (1) von dem rotierenden Antriebsorgan zur Erfassung und Messung (3) verschieden ist.

2. Basisdiagnosesystem nach Anspruch 1, wobei das zu diagnostizierende rotierende Antriebsorgan (1) ein Rad ist und das rotierende Antriebsorgan zur Erfassung und Messung (3) eine Wälzlagereinheit ist.

3. Basisdiagnosesystem nach einem der Ansprüche 1 bis 2, wobei ein Defekt die momentane Drehzahl mit unterschiedlicher Frequenz beeinflusst, je nachdem, ob er an dem zu diagnostizierenden rotierenden Antriebsorgan (1) oder an dem rotierenden Antriebsorgan zur Erfassung und Messungt (3) auftritt.

4. Basisdiagnosesystem nach einem der Ansprüche 1 bis 3, wobei das Rechen- und Analysemittel (8) konfiguriert ist:
- zum Messen der momentanen Drehzahl des rotierenden Antriebsorgans zur Erfassung und Messung,
- zum winkelmäßigen Abtasten der Messung, um ein abgetastetes Signal zu erhalten, das repräsentativ für die momentane Drehzahl des rotierenden Antriebsorgans zur Erfassung und Messungs ist,
- zum Durchführen einer räumlichen harmonischen Analyse des abgetasteten Signals, um ein Spektrum der momentanen Drehzahl des rotierenden Antriebsorgans zur Erfassung und Messung zu erhalten, z. B. durch räumliche Fourier-Transformation des abgetasteten Signals,
- zum Überwachen der Amplitude des Spektrums hinsichtlich der charakteristischen Frequenz.

5. Basisdiagnosesystem nach einem der Ansprüche 1 bis 4, wobei der Parameter der Rollbedingungen des rotierenden Antriebsorgans zur Erfassung und Messung (3) anhand der momentanen Drehzahl des rotierenden Antriebsorgans zur Erfassung und Messung (3) berechnet wird.

6. Basisdiagnosesystem nach einem der Ansprüche 1 bis 5, ferner umfassend:
ein Drahtlosdatenkommunikationsmittel (9) in einem bestimmten Abdeckungsbereich, das an Bord des Apparats, der Maschine, des Geräts (4) ist, das funktionell dem Datenspeichermittel (7) zugeordnet ist und das geeignet ist, die gespeicherten Daten zu übertragen,
mindestens eine Datensammeleinheit (10), die strukturell von dem Apparat, der Maschine, dem Gerät (4) getrennt ist, die geeignet ist, strukturell im Abdeckungsbereich der Kommunikationsmittel (9) des Apparats, der Maschine, des Geräts (4) mit diesem Kommunikationsmittel positioniert zu werden und die gespeicherten Daten zu sammeln.

7. Basisdiagnosesystem nach Anspruch 6, wobei:
das Berechnungs- und Analysemittel (8) von dem Apparat, der Maschine, dem Gerät (4) getrennt ist,
wobei das Datenspeichermittel (7) geeignet ist, die Daten zu speichern, die für Rollbedingungen charakteristisch sind,
wobei das Datenkommunikationsmittel (9) geeignet ist, die Daten , die für Rollbedingungen charakteristisch sind zu übertragen, und insbesondere, wobei:
das Berechnungs- und Analysemittel (8) sich auf dem Apparat, der Maschine, dem Gerät (4) befindet,
das Datenspeichermittel (7) geeignet ist, die Diagnoseinformation zu speichern,
das Datenkommunikationsmittel (9) geeignet ist, die Diagnoseinformation zu übertragen.

8. Basisdiagnosesystem nach einem der Ansprüche 1 bis 7, wobei das Berechnungs- und Analysemittel (8) so programmiert ist, dass es auf der Grundlage der Charakteristikdaten ein Verfahren zum Erkennen einer strukturellen Abnormalität ganz oder teilweise ausführt und/oder ein Verfahren zum Vorhersagen eines strukturellen Zustands nach einer bestimmten Rotation ausführt.

9. Basisdiagnosesystem nach einem der Ansprüche 1 bis 8, wobei die Einrichtung zur elektrischen Versorgung der Mittel des auf dem Apparat, der Maschine, dem Gerät (4) befindlichen Basisdiagnosesystems entweder spezifisch für das Diagnosesystem und autonom ist, wie z. B. elektrische Batterien oder mittels Mitteln zur Energierückgewinnung, oder zumindest teilweise mehreren ähnlichen, auf demselben Apparat, derselben Maschine oder demselben Gerät montierten Basisdiagnosesystemen gemeinsam ist, und mehreren Antriebssträngen davon zugeordnet ist, oder zumindest teilweise den Mitteln zur elektrischen Energieversorgung des Apparats, der Maschine, des Geräts (4) gemeinsam ist, und das insbesondere zusätzlich ein Mittel zum Steuern und Informieren des elektrischen Ladezustands der Mittel zur elektrischen Energieversorgung umfasst.

10. Basisdiagnosesystem nach einem der Ansprüche 6 bis 9, umfassend ein drahtloses Datenkommunikationsmittel (9) über kurze Entfernungen von weniger als etwa 100 Metern, insbesondere weniger als etwa 20 Metern, und/oder über mittlere Entfernungen zwischen etwa 100 Metern und etwa 500 Metern und/oder übergroße Entfernungen zwischen etwa 500 Metern und einigen Kilometern.

11. Basisdiagnosesystem nach einem der Ansprüche 6 bis 9, das Datenspeichermittel (7) für eine Zeitspanne umfasst, die entweder der Zeitspanne zwischen zwei aufeinanderfolgenden Datenerfassungen durch eine Erfassungseinheit oder einer vorbestimmten Zeitspanne entspricht, die durch den Bediener, der das Basisdiagnosesystem implementiert, eingestellt wird, wobei das Speichermittel am Ende der Zeitspanne von den zuvor gespeicherten Daten geleert wird, und das insbesondere auch Mittel zur permanenten Speicherung von Daten umfasst.

12. Basisdiagnosesystem nach einem der Ansprüche 6 bis 11, wobei eine Datensammeleinheit (10) entweder feststehend oder beweglich, insbesondere transportabel, insbesondere ganz oder teilweise tragbar ist, wie beispielsweise ein tragbares Messteil und ein Andockkonsolenteil.

13. Basisdiagnosesystem nach einem der Ansprüche 6 bis 12, im Falle der Anwendung auf ein Gerät (4) mit Rädern für dessen Bewegung auf einem Bahnnetz (5), wobei zusätzlich eines und/oder andere der folgenden Merkmale implementiert ist/sind:
in der Erfassungsposition eine Erfassungseinheit entlang einer Bahn (5) des Netzes, auf einer oder beiden Seiten der Bahn (5), insbesondere gegenüberliegend, oder in dem Bereich, wo mehrere Bahnen (5) des Netzes strukturell nahe beieinander liegen, zugeordnet ist;
wobei das Basissystem entweder eine einzige Sammeleinheit für das gesamte Bahnnetz (5) oder eine Mehrzahl von Sammeleinheiten, insbesondere eine Mehrzahl von in Bezug auf das Bahnnetz (5) verteilten und insbesondere zumindest annähernd regelmäßig verteilten Sammeleinheiten, umfasst;
wobei eine Erfassungseinheit einer Schiene zugeordnet ist, auf dem das Gerät (4) unter normalen Bedingungen entweder rollt oder feststehend ist, wobei die Diagnose jeweils für ein rollendes Gerät (4) oder ein feststehendes Gerät (4) durchgeführt wird.

14. Basisdiagnosesystem nach einem der Ansprüche 1 bis 13, das entweder ein einzelnes Erfassungs- und Messinstrument (6) oder mindestens zwei parallel geschaltete Erfassungs- und Messinstrumente, insbesondere ein hochauflösendes Erfassungs- und Messinstrument (6) und ein Erfassungs- und Messinstrument (6) mit geringer Stromverbrauch, insbesondere ein niedrigauflösendes Erfassungs- und Messinstrument (6), umfasst.

15. Komplexes System zur Diagnose des strukturellen Zustandes mindestens eines zu diagnostizierenden, rotierenden Antriebsorgans (1) mehrerer Antriebsstränge eines Apparats, einer Maschine, eines Geräts (4), insbesondere eines Geräts (4) auf Rädern zur Bewegung auf einem Bahnnetz (5), wobei jede der Antriebsstränge mehrere einander zugeordnete rotierende Antriebsorgane umfasst, darunter ein rotierendes Antriebsorgan zur Erfassung und Messung (3), das sich von dem zu diagnostizierenden rotierenden Antriebsorgan (1) unterscheidet, und mindestens eine Rolleinheit (2c), wobei die mehreren rotierenden Antriebsorgane insbesondere mindestens ein Rad, mindestens eine mit dem Rad zugeordnete Achse, die mindestens eine mit der Achse und dem Rahmen des Geräts (4) zugeordnete Rolleinheit (2c) und optional mindestens eine Drehantriebsvorrichtung für die Achse sind, mehrere Antriebsstränge, die zumindest teilweise gemeinsam sein können, wie in einer Achse oder einem Drehgestell, das für jeden Antriebsstrang (2) ein Basisdiagnosesystem nach einem der Ansprüche 1 bis 14 umfasst, wobei die Basisdiagnosesysteme entweder getrennt oder teilweise gemeinsam sind.

16. Basisdiagnosesubsystem, das insbesondere dazu bestimmt ist, Teil eines Basisdiagnosesystems nach einem der Ansprüche 1 bis 14 zu sein, indem es sich auf einem Apparat, einer Maschine , einem Gerät (4), insbesondere einem Gerät (4) auf Rädern zur Bewegung auf einem Bahnnetz (5), mit mindestens einem Antriebsstrang (2), umfassend mehrere einander zugeordnete rotierende Antriebsorgane, befindet und daran montiert ist, mit einem von dem zu diagnostizierenden rotierenden Antriebsorgan verschiedenen rotierenden Antriebsorgan zur Erfassung und Messung (3), mindestens einer Rolleinheit (2c), wobei die mehreren rotierenden Antriebsorgane insbesondere mindestens ein Rad, mindestens einer mit dem Rad assoziierten Achse, der mindestens einen der Achse zugeordneten Rolleinheit (2c) und dem Rahmen des Geräts (4), und optional mindestens einer Drehantriebsvorrichtung für die Achse sind, das folgendes umfasst:
ein Erfassungs- und Messinstrument und gegebenenfalls ein Verarbeitungsmittel,
ein Datenspeichermittel (7),
ein Drahtlosdatenkommunikationsmittel (9) innerhalb eines bestimmten Abdeckungsbereichs;
und das ferner insbesondere eine Einrichtung zur eigenen elektrischen Versorgung umfasst.

17. Basisdiagnosesubsystem nach Anspruch 16, **dadurch gekennzeichnet, dass** es sich im demontierten Zustand befindet und für die Anordnung und die Montage auf dem Apparat, der Maschine, dem Gerät (4), insbesondere dem Gerät (4) auf Rädern, geeignet ist.

18. Basisdiagnosesubsystem nach Anspruch 16, **dadurch gekennzeichnet, dass** es sich im montierten Zustand befindet und auf dem Apparat, der Maschine, dem Gerät(4), insbesondere dem Gerät (4) auf Rädern, als Erstausrüstung in den Apparat, die Maschine, das Gerät (4) integriert ist oder nach dessen Herstellung auf dem Apparat, der Maschine, dem Gerät (4) montiert ist.

19. Apparat, Maschine, Gerät (4), insbesondere Gerät (4) auf Rädern zum Bewegen auf einem Bahnnetz (5), mit mindestens einem Antriebsstrang (2), umfassend mehrere einander zugeordnete, rotierende Antriebsorgane, darunter mindestens ein zu diagnostizierendes Organ (1), dessen struktureller Zustand zu diagnostizieren ist, ein von dem zu diagnostizierenden rotierenden Antriebsorgan (1) verschiedenes rotierendes Antriebsorgan zur Erfassung und Messung (3), mindestens eine Rolleinheit (2c), wobei die mehreren rotierenden Antriebsorgane insbesondere mindestens ein Rad, mindestens eine dem Rad zugeordnete Achse, die mindestens eine der Achse und dem Rahmen des Geräts (4) zugeordnete Rolleinheit (2c) und gegebenenfalls mindestens eine Drehantriebsvorrichtung für die Achse sind, auf welchem Apparat, welcher Maschine, welchem Gerät(4) mindestens ein Basisdiagnosesubsystem nach einem der Ansprüche 16 bis 18 befindlich und montiert ist, das insbesondere dazu bestimmt ist, einen Teil eines Basisdiagnosesystems nach einem der Ansprüche 1 bis 14 zu bilden, indem es dem Antriebsstrang (2), umfassend das zu diagnostizierende Organ, zugeordnet ist.

20. Apparat, Maschine, Gerät (4), insbesondere Gerät (4) auf Rädern nach Anspruch 19, wobei das Basisdiagnosesubsystem entweder als Erstausrüstung in den Apparat, die Maschine, das Gerät (4) integriert ist oder nach dessen Herstellung an den Apparat, die Maschine, das Gerät (4), insbesondere mit einer Mehrzahl von Rädern und mehreren Antriebssträngen, wie beispielsweise ein gezogenes Gerät (4), insbesondere einen Zug, oder ein mobiles oder automobiles Gerät (4), montiert wird.

21. Verfahren zum Durchführen eines Basisdiagnosesystems nach einem der Ansprüche 6 bis 13, wobei:
unter Verwendung des Erfassungs- und Messinstruments der Wert des Parameters über die Zeit gemessen und gesammelt wird und die für die Rollbedingungen des zu diagnostizierenden rotierenden Antriebsorgans (1) Charakteristikdaten bereitgestellt werden, unter Verwendung der Berechnungs- und Analysemittel (8) eine Diagnoseinformation über den aktuellen oder vorhergesagten strukturellen Zustand des zu diagnostizierenden rotierenden Antriebsorgans (1) bereitgestellt wird,
unter Verwendung der Datenkommunikationsmittel (9) und der Sammeleinheit Daten an die Datensammeleinheit (10) übertragen werden, während letztere strukturell im Abdeckungsbereich der Kommunikationsmittel positioniert ist;
und insbesondere im Falle der Anwendung auf ein Gerät (4) auf Rädern für dessen Bewegung auf einem Bahnnetz (5), bei dem die Sammeleinheit einer Bahn zugeordnet ist, auf der sich das Gerät (4) im Normalfall entweder bewegt oder steht, und die Diagnose jeweils für ein bewegtes Gerät (4) oder ein stehendes Gerät (4) durchgeführt wird.

22. Verfahren nach Anspruch 21, wobei das Erfassungs- und Messinstrument so betrieben wird, dass es den Parameter der Rollbedingungen des rotierenden Antriebsorgans zur Erfassung und Messung (3), der aus der momentanen Drehzahl des rotierenden Antriebsorgans zur Erfassung und Messung (3) berechnet wird, über die Zeit misst und sammelt.

## Claims

1. **Basic system** for diagnosing the structural state of at least one **rotary kinematic member (1) which is to be diagnosed** of a kinematic chain (2) of an apparatus, a machine, or a **device (4),** in particular a wheeled for movement thereof on a network of tracks (5), said kinematic chain (2) having a plurality of rotary kinematic members which are associated with one another, including **a measuring and collecting rotary kinematic member (3),** at least one rolling bearing unit (2c), the plurality of rotary kinematic members being in particular at least one wheel, at least one axle which is associated with the wheel, the at least one rolling bearing unit (2c) being associated with the axle and the chassis of the device, and, where appropriate, at least one device for rotating the axle, which system comprises:
an **apparatus (6) for measuring and collecting** the value of at least one **parameter** of the rolling conditions of the rotary kinematic member (3), this parameter being characteristic of the structural state of the rotary kinematic member (1) to be diagnosed, this measuring and collecting apparatus (6) being on board the apparatus, the machine, or the device (4), structurally and functionally associated with the measuring and collecting rotary kinematic member (3) and capable of measuring and collecting the values of said parameter and of providing data characteristic of the rolling conditions of the rotary kinematic member (1) to be diagnosed, where appropriate, by means of functionally associated processing means,
a **data storage means** (7) which is on board the apparatus, the machine, or the device (4),
a **calculation and analysis means** (8) which is capable, on the basis of variations in said characteristic data, in a **frequency** corresponding to the rotary kinematic member (1) to be diagnosed and in at least one predetermined significant value of, or function of, the characteristic parameter, of providing diagnostic information regarding the present or predicted structural state of the rotary kinematic member (1) to be diagnosed,
**characterized in that** the rotary kinematic member (1) to be diagnosed is different from the measuring and collecting rotary kinematic member (3).

2. Basic diagnostic system according to claim 1, wherein the rotary kinematic member (1) to be diagnosed is a wheel and the measuring and collecting rotary kinematic member (3) is a rolling bearing unit with rolling bodies.

3. Basic diagnostic system according to either of claims 1 to 2, wherein a fault impacts the instantaneous speed with a different frequency depending on whether it occurs on the rotary kinematic member (1) to be diagnosed or on the measuring and collecting rotary kinematic member (3).

4. Basic diagnostic system according to any of claims 1 to 3, wherein the calculation and analysis means (8) is configured for:
- measuring the instantaneous speed of rotation of the measuring and collecting rotary kinematic member,
- angularly sampling the measurement to obtain a sampled signal which is representative of the instantaneous speed of rotation of the measuring and collecting rotary kinematic member,
- carrying out a spatial harmonic analysis of the sampled signal to obtain a spectrum of the instantaneous speed of rotation of the measuring and collecting rotary kinematic member, for example by spatial Fourier transform of the sampled signal,
- monitoring the amplitude of the spectrum for the characteristic frequency.

5. Basic diagnostic system according to any of claims 1 to 4, wherein the parameter of the rolling conditions of the measuring and collecting rotary kinematic member (3) is calculated from the instantaneous speed of rotation of the measuring and collecting rotary kinematic member (3).

6. Basic diagnostic system according to any of claims 1 to 5, which further has:
a means (9) for data communication by wireless link in a particular coverage region, which means is on board the apparatus, the machine, or the device (4) and functionally associated with the data storage means (7), capable of transferring the stored data,
at least one data collection unit (10) which is structurally separate from the apparatus, the machine, or the device (4) and is capable of being structurally positioned in the coverage region of the communication means (9) of the apparatus, the machine, or the device (4) having this communication means, and of collecting the stored data.

7. Basic diagnostic system according to claim 6, wherein:
the calculation and analysis means (8) is separate from the apparatus, the machine, or the device (4),
the data storage means (7) is capable of storing the data which are characteristic of rolling conditions,
the data communication means (9) is capable of transferring the data which are characteristic of rolling conditions, and in particular, wherein:
the calculation and analysis means (8) is on board the apparatus, the machine, or the device (4),
the data storage means (7) is capable of storing the diagnostic information, and
the data communication means (9) is capable of transferring the diagnostic information.

8. Basic diagnostic system according to any of claims 1 to 7, wherein the calculation and analysis means (8) is programmed so as to, from the characteristic data, implement all or part of a method for detecting a structural anomaly, and/or implement a method for predicting a structural state after a certain rotation.

9. Basic diagnostic system according to any of claims 1 to 8, wherein the means of supplying electric power to the means of the basic diagnostic system that are on board the apparatus, the machine, or the device (4) is either specific to said diagnostic system and autonomous such as electric batteries or by means of energy recovery means, or is at least partly common to a plurality of basic analog diagnostic systems which are mounted on the same apparatus, machine, or device (4) and associated with a plurality of kinematic chains thereof, or is at least partly common to the electric power supply means of the apparatus, the machine, or the device (4), and which system further comprises in particular a means of monitoring and information regarding the state of electric charge of the electric power supply means.

10. Basic diagnostic system according to any of claims 6 to 9, comprising a means (9) of data communication by wireless link at a short distance of less than approximately 100 meters, more particularly less than approximately 20 meters, and/or a medium distance of between approximately 100 meters and approximately 500 meters, and/or a long distance of between approximately 500 meters and a few kilometers.

11. Basic diagnostic system according to any of claims 6 to 9, which comprises a means (7) for storing data for a period of time which either corresponds to the period of time between two successive collections of data by a collection unit, or corresponds to a predetermined duration fixed by the operator implementing the basic diagnostic system, the storage means being emptied of the data previously stored at the end of the period of time, and which system in particular also comprises a permanent data storage means.

12. Basic diagnostic system according to any of claims 6 to 11, wherein a data collection unit (10) is either fixed or movable, in particular transportable, more particularly portable in whole or in part such as a portable measuring part and a part forming a receiving console.

13. Basic diagnostic system according to any of claims 6 to 12, when applied in a wheeled device (4) for the movement thereof on a network of tracks (5), wherein one and/or another of the following characteristics are implemented:
in the collection position, a collection unit is arranged along a track (5) of the network, on one or both sides of said track (5), in particular opposite, or in the region where a plurality of tracks (5) of the network are structurally close to one another;
the basic system either comprises a single collection unit for the entire network of tracks (5) or comprises a plurality of collection units, in particular a plurality of collection units which are distributed relative to the network of tracks (5), and more particularly are distributed at least roughly regularly;
a collection unit is associated with a track where, in a normal situation, the device (4) either is in motion or is stopped, the diagnosis being carried out for a travelling device (4) or a stationary device (4), respectively.

14. Basic diagnostic system according to any of claims 1 to 13, which comprises either a single measuring and collecting apparatus (6) or at least two measuring and collecting apparatuses which are connected in parallel, in particular a measuring and collecting apparatus (6) of high resolution and a measuring and collecting apparatus (6) of low power consumption, in particular of low resolution.

15. Complex system for diagnosing the structural state of at least one rotary kinematic member (1) which is to be diagnosed of a plurality of kinematic chains of an apparatus, a machine, or a device (4), in particular a wheeled device (4) for the movement thereof on a network of tracks (5), each of said kinematic chains comprising a plurality of rotary kinematic members which are associated with one another, including a measuring and collecting rotary kinematic member (3) which is different from the rotary kinematic member (1) to be diagnosed, at least one rolling bearing unit (2c), the plurality of rotary kinematic members being in particular at least one wheel, at least one axle which is associated with the wheel, the at least one rolling bearing unit (2c) being associated with the axle and the chassis of the device (4), and, where appropriate, at least one device for rotating the axle, it being possible for a plurality of kinematic chains to be at least partly common as in an axle or a bogie, which system comprises, for each kinematic chain (2), a basic diagnostic system according to any of claims 1 to 14, the basic diagnostic systems either being separate or being partly common.

16. Basic diagnostic sub-system, in particular intended to form part of a basic diagnostic system according to any of claims 1 to 14 by being on board and mounted on an apparatus, a machine, or a device (4), in particular a wheeled device (4) for the movement thereof on a network of tracks (5), comprising at least one kinematic chain (2) having a plurality of rotary kinematic members which are associated with one another, including a measuring and collecting rotary kinematic member (3) which is different from the rotary member to be diagnosed, at least one rolling bearing unit (2c), the plurality of rotary kinematic members being in particular at least one wheel, at least one axle which is associated with the wheel, the at least one rolling bearing unit (2c) being associated with the axle and the chassis of the device (4), and, where appropriate, at least one device for rotating the axle, which sub-system comprises:
a measuring and collecting apparatus and, where appropriate, a processing means, a data storage means (7),
a means (9) of data communication by wireless link in a particular coverage region;
and which sub-system further comprises in particular a clean electrical power supply means.

17. Basic diagnostic sub-system according to claim 16, **characterized in that** it is in an unmounted state and is capable of being on board and mounted on the apparatus, the machine, or the device (4), in particular the wheeled device (4).

18. Basic diagnostic sub-system according to claim 16, **characterized in that** it is in the mounted state and on board the apparatus, the machine, or the device (4), in particular the wheeled device (4), integrated into the apparatus, the machine, or the device (4) as original equipment, or mounted on the apparatus, the machine, or the device (4) after its completion.

19. Apparatus, machine, or device (4), in particular wheeled device (4) for the movement thereof on a network of tracks (5), comprising at least one kinematic chain (2) having a plurality of rotary kinematic members which are associated with one another, including at least one member (1) to be diagnosed, of which the structural state is to be diagnosed, a measuring and collecting rotary kinematic member (3) which is different from the rotary kinematic member (1) to be diagnosed, at least one rolling bearing unit (2c), the plurality of rotary kinematic members being in particular at least one wheel, at least one axle which is associated with the wheel, the at least one rolling bearing unit (2c) being associated with the axle and the chassis of the device (4), and, where appropriate, at least one device for rotating the axle, on which apparatus, machine, or device at least one basic diagnostic sub-system according to any of claims 16 to 18 is mounted and on board, the sub-system in particular intended to be part of a basic diagnostic system according to any of claims 1 to 14, by being associated with the kinematic chain (2) comprising the member to be diagnosed.

20. Apparatus, machine, or device (4), in particular a wheeled device (4), according to claim 19, wherein the basic diagnostic sub-system is either integrated in the apparatus, the machine, or the device (4) as original equipment, or is mounted on the apparatus, the machine, or the device (4) after its completion, in particular which apparatus, machine, or device comprises a plurality of wheels and a plurality of kinematic chains, such as a towed device (4), in particular a train, or a mobile or automobile device (4).

21. Method for implementing a basic diagnostic system according to any of claims 6 to 13, wherein:
by implementing the measuring and collecting apparatus the value of said parameter is measured and collected overtime and data characteristic of the rolling conditions of the rotary kinematic member (1) to be diagnosed are provided, by implementing the calculation and analysis means (8) diagnostic information regarding the present or predicted structural state of the rotary kinematic member (1) to be diagnosed is provided,
by implementing the data communication means (9) and the collection unit data are transferred to the data collection unit (10) while said data collection unit is structurally positioned in the coverage region of the communication means;
and in particular,when applied in a wheeled device (4) for the movement thereof on a network of tracks (5), wherein the collection unit is associated with a track where, in a normal situation, the device (4) either is in motion or is stopped, and the diagnosis is carried out for a travelling device (4) or a stationary device (4), respectively.

22. Method according to claim 21, wherein the measuring and collecting apparatus is implemented so as to measure and collect, over time, the parameter of the rolling conditions of the measuring and collecting rotary kinematic member (3) calculated from the instantaneous speed of rotation of the measuring and collecting rotary kinematic member (3).
